# EUROPEAN PATENT APPLICATION

(11) **EP 4 763 314 A1**
(43) Date of publication of application: **24.06.2026**
(21) Application number: 24222424.4
(22) Date of filing: 20.12.2024
(51) Int. Cl.: B01D 53/56, C01B 21/20, C01B 21/30, C01B 21/32, C01B 21/38, C01B 21/40

(54) **PRODUCTION OF NITROGEN OXIDES AND NITRIC ACID**

(71) Applicant: Nitrocapt AB, 756 51 Uppsala (SE)
(72) Inventor: FORSBERG, Gustaf, 749 60 Örsundsbro (SE); JALALUDIN, Ahmad, 171 60 Solna (SE); MÜLLER, Leopold, 75443 Ötisheim (DE)
(74) Representative: Kransell & Wennborg KB

(57) **Abstract**

There is provided a system (1) comprising:
- a plasma reactor (100) having an inlet (101) and an outlet (102) and a quenching arrangement (133) configured to quench NOx, the plasma reactor (100) being configured to conduct nitrogen oxide (NOx) formation;
- a conversion arrangement (105) being configured to convert the NOₓ to nitric acid (HNO₃), the conversion arrangement (105) is having an inlet (106), a first outlet configured to remove HNO₃ (107) and a second outlet configured to remove residual gas (108), the inlet (106) of the conversion arrangement being configured to receive formed NOx from the plasma reactor (100);
- a compressor (109) having an inlet (110) and an outlet (111), the compressor being configured to increase pressure of gas to a pressure of ≥ 1.1 bar, the inlet (110) of the compressor (109) configured to receive residual gas from the second outlet (108) of the conversion arrangement (105); and the outlet of the compressor (111) is arranged upstream of the inlet (101) of the plasma reactor (100); and
- an arrangement (134) configured to supply quenching medium to the outlet (102) and/or to the quenching arrangement (133) of the plasma reactor (100), the quenching arrangement (134) being configured to supply the quenching medium from the outlet (111) of the compressor (109) and/or from the second outlet (108) of the conversion arrangement (105).

## Description

### TECHNICAL FIELD

The present disclosure relates to the field of production of nitrogen oxides (NOx), and in particular to production of nitrogen oxides by plasma technology.

### BACKGROUND

Nitrogen oxides (NOₓ) are regularly used in production of nitric acid, which is used for the production of nitrate based fertilizers, such as ammonium nitrate or calcium nitrate, for the production of explosives, as solvents and for other chemical processes, as well as for bleaching and sterilization. Nitrogen is a key element for plants and therefore one of the most important nutrients in fertilizers. In the last century, nitrogen-containing fertilizers have been produced from atmospheric nitrogen essentially through the Haber-Bosch process to synthesize ammonia from hydrogen originating from fossil-based steam reforming and molecular nitrogen followed by the Ostwald process to produce nitric acid through oxidation of the ammonia. The nitric acid is then used for example as a source for producing nitrate fertilizers.

Alternatively, nitric acid can be synthesized through nitrogen fixation through the Birkeland-Eyde process, invented in 1903. By the aid of an electric arc, a thermal oxidation of atmospheric nitrogen into NO is conducted, and the NO spontaneously converts to NO₂ as the gas is cooled in the presence of oxygen. NO₂ is subsequently scrubbed with water and, thereby, converted into nitric acid. However, the thermal oxidation of nitrogen gas is highly energy demanding and therefore the Haber-Bosch and Ostwald processes became the leading processes used commercially to fix nitrogen from the air and to produce nitric acid.

Due to the emissions of greenhouse gases (CO₂, NO, N₂O) from the steam reforming and Haber-Bosch process combined with the Ostwald process, the direct oxidation of nitrogen has returned as an interesting option. However, due to the high energy demands of the Birkeland-Eyde process, there are improvements to be made especially regarding energy efficiency.

### SUMMARY

An objective of the present disclosure is to provide a system for production of nitrogen oxides as well as nitric acid beneficial in terms of energy efficiency.

Accordingly, the present disclosure provides the following list of itemized embodiments:
1. A system comprising:
   - a plasma reactor having an inlet and an outlet and a quenching arrangement configured to quench NOx, the plasma reactor being configured to conduct nitrogen oxide, NOx, formation;
   - a conversion arrangement being configured to convert the NOₓ to nitric acid, HNO₃, the conversion arrangement is having an inlet, a first outlet configured to remove HNO₃ and a second outlet configured to remove residual gas, the inlet of the conversion arrangement being configured to receive the formed NOx from the plasma reactor;
   - a compressor having an inlet and an outlet, the compressor being configured to increase pressure of gas to a pressure of ≥ 1.1 bar, the inlet of the compressor configured to receive residual gas from the second outlet of the conversion arrangement; and the outlet of the compressor is arranged upstream of the inlet of the plasma reactor; and
   - an arrangement configured to supply quenching medium to the outlet and/or to the quenching arrangement of the plasma reactor, the quenching arrangement being configured to supply the quenching medium from the outlet of the compressor and/or from the second outlet of the conversion arrangement.
2. The system according to item 1 further comprising:
   - a conduit for providing a gas mixture comprising oxygen and nitrogen;
   - a gas source arrangement configured to provide the gas mixture to the conduit;

   the conduit being configured to direct the gas mixture comprising oxygen and nitrogen to the quenching arrangement and/or to the outlet of the plasma reactor, or
   to the inlet of the plasma reactor.
3. The system of item 1 or 2 further comprising:
   - a first heat exchanger comprising a first conduit configured to cool a gas mixture comprising oxygen and nitrogen downstream of the plasma reactor, as well as a second conduit configured to heat a gas mixture comprising oxygen and nitrogen upstream of the plasma reactor, the first heat exchanger is configured to direct the gas mixture discharged from the second conduit of the first heat exchanger to the inlet of the plasma reactor, and the first conduit of the first heat exchanger is configured to receive the formed NOx from the plasma reactor and to direct the NOx to the inlet of the conversion arrangement.
4. The system of item 2 or 3, wherein the first conduit of the first heat exchanger is configured to receive the formed NOx from the plasma reactor and to direct the gas mixture and NOx to the inlet of the conversion arrangement.
5. The system of item 3 or 4, further comprising:
   - a first valve configured to distribute gas being configured to direct the gas mixture discharged from the outlet of the compressor to the second conduit of the first heat exchanger and/or to the conduit for providing the gas mixture and/or to a conduit for providing the gas mixture downstream of the outlet of the plasma reactor or to the plasma reactor and configured to direct the gas mixture to the quenching arrangement.
6. The system of any one of the items 2-5, further comprising a second valve configured to distribute gas being configured to direct the gas mixture from the gas source arrangement and/or the gas discharged from the first valve to the conduit.
7. The system according to any one of the items 2-6, the gas source arrangement further comprising an oxygen concentration arrangement, such as an oxygen sieve or a membrane separation or a cryogenic gas separation.
8. The system according to any one of the items 2-7, the gas source arrangement further comprising a device configured to supply air.
9. The system according to any one of the items 2-6, the gas source arrangement further comprising a device configured to supply nitrogen gas, a device configured to supply oxygen gas and a third valve configured to distribute gas being configured to supply nitrogen gas from the device and oxygen gas from the device to the second valve.
10. The system according to any one of the items 3-9, the system further comprises an arrangement configured to recover energy being configured to receive the gas mixture from the first conduit of the first heat exchanger, and supply the gas mixture to the inlet of the conversion arrangement, and receive the residual gas from the second outlet of the conversion arrangement and supply the residual gas to the inlet of the compressor.
11. The system of item 10, the arrangement configured to recover energy comprises a second heat exchanger, optionally a third heat exchanger and an arrangement configured to produce electricity, the second heat exchanger comprises a first conduit configured to cool and/or heat a gas mixture comprising oxygen and nitrogen, to receive the gas mixture from the first conduit of the first heat exchanger and to supply the gas mixture to the inlet or the conversion arrangement, a second conduit configured to receive a medium from either the optional third heat exchanger or from the arrangement, to cool and/or heat the gas mixture and to provide the medium to the arrangement, the optional third heat exchanger, if included, comprises a first conduit being configured to receive the residual gas from the second outlet of the conversion arrangement and supply the residual gas to the inlet of the compressor, a second conduit configured to cool and/or heat the medium and to receive the medium from the arrangement as well as provide the medium to the second conduit of the second heat exchanger.
12. The system of item 11, the arrangement configured to produce electricity comprises a second compressor configured to pressurise the medium and provide the pressurized medium to the second conduit of the third heat exchanger, and a turbine configured to receive the medium from the second conduit of the second heat exchanger, the turbine being axially connected to the second compressor, and the turbine being connected to a second arrangement for energy recovery.
13. The system of item 12, the arrangement comprises a fourth heat exchanger, a fifth heat exchanger, a sixth heat exchanger, and a second turbine, the fourth heat exchanger comprises a first conduit being configured to cool and/or heat a medium for energy recovery downstream of the turbine, as well as a second conduit configured to cool and/or heat a medium downstream of the fifth heat exchanger and upstream of the second turbine, the fourth heat exchanger is configured to direct the medium discharged from the first conduit to the fifth heat exchanger, the fifth heat exchanger comprises a first conduit being configured to cool and/or heat a medium downstream of the fourth heat exchanger, and a second conduit configured to cool and/or heat a medium upstream of the sixth heat exchanger, the sixth heat exchanger comprises a first conduit configured to cool and/or heat a medium downstream of the second turbine and upstream of the fifth heat exchanger.
14. The system according to any one of the items 3-13, further comprising a seventh heat exchanger or a cooler/condenser arrangement being configured to cool and/or heat a gas mixture comprising oxygen and nitrogen downstream of the first conduit of the first heat exchanger and to supply the gas mixture to the inlet of the conversion arrangement.
15. A method for conducting nitrogen oxide formation in a plasma reactor having an inlet and an outlet and a quenching arrangement configured to quench NOx, wherein the method comprises the steps:
   - providing a gas mixture comprising oxygen and nitrogen;
   - compress the gas mixture to a pressure of ≥ 1.1 bar in a first compressor;
   - supply the compressed gas having a pressure of ≥ 1.1 bar to the inlet of the plasma reactor and conduct NOx formation in a plasma;
   - quench the NOx formed in the plasma reactor by bringing the NOx in contact with a quenching medium, the quenching medium is at least partly provided from an outlet of a compressor, and/or
      from the second outlet of the conversion arrangement,
   - supply the NOx to an inlet of a conversion arrangement converting the NOₓ to HNO3;
   - remove the formed HNO₃ through a first outlet of the conversion arrangement and remove residual gas through a second outlet; and
   - supply the residual gas from the second outlet to an inlet of a first compressor.
16. The method of item 15, wherein the NOx exiting the plasma reactor is cooled before being supplied to the inlet of the conversion arrangement.
17. The method of item 16, wherein the cooling is conducted in a device for heat recovery, such as a first heat exchanger.
18. The method of item 17, wherein part of the compressed gas supplied from the first compressor is to the device for heat recovery and/or part of the gas is supplied downstream of the outlet of the plasma reactor.
19. The method of item 18, wherein the gas mixture comprising oxygen and nitrogen is a mixture comprising gas supplied from a gas source arrangement configured to provide a gas mixture of oxygen and nitrogen and compressed gas supplied from the first compressor.
20. The method of according to any one of the items 16-19, wherein the NOx exiting the plasma reactor is after being cooled supplied to an arrangement configured to recover energy prior to being supplied to the inlet of the conversion arrangement, and wherein the residual gas supplied from the second outlet of the conversion arrangement is supplied to the arrangement for energy recovery prior to the inlet of the first compressor.
21. The method of item 20, wherein the arrangement for energy recovery comprises a second heat exchanger, optionally a third heat exchanger, and an arrangement configured to produce electricity, wherein the NOx exiting the plasma reactor is after being cooled supplied to the second heat exchanger prior to the inlet of the conversion arrangement, and the residual gas supplied from the second outlet of the conversion arrangement is supplied to the optional third heat exchanger, the gas passing the second heat exchanger is cooled, if included, the gas passing the third heat exchanger is cooled and heat extracted from the second and third heat exchangers is turned into electricity in the arrangement configured to produce electricity.
22. The method according to any one of the items 16-21, wherein the cooled NOx supplied from the outlet of the plasma reactor is further cooled in a seventh heat exchanger or a cooler/condenser arrangement prior to being supplied to the inlet of the conversion arrangement.
23. The method according to any one of the items 16-22, wherein the gas is compressed to a pressure of ≥ 1.2 bar, such as ≥ 1.3 bar, such as ≥ 1.5 bar, such as ≥ 5 bar such as ≥ 10 bar, such as 1.2-100 bar, such as 5-100 bar, such as 10-100 bar in the first compressor.
24. The method according to any one of the items 16-23, wherein the quenching medium is a gas mixture comprising oxygen and nitrogen, such as air, water, oxygen gas, nitrogen gas or mixtures thereof, or the quenching medium is a liquid comprising water, nitrogen, oxygen, air or mixtures of gas and mixture thereof.
25. The method according to any one of the items 16-24, wherein the quenching medium is at least partly provided from the outlet of the first compressor and/or from the second outlet of the conversion arrangement.
26. The method according to any one of the items 16-25, wherein the gas mixture comprising oxygen and nitrogen is provided to the quenching arrangement and/or to the outlet of the plasma reactor, or
to the inlet of the plasma reactor.

### BRIEF DESCRIPTION OF THE DRAWINGS

Figure 1 schematically shows a system of an example embodiment.
Figure 2 schematically shows a system of an example embodiment.
Figure 3 schematically shows a system of an example embodiment.
Figure 4 schematically shows a system of an example embodiment.
Figure 5 schematically shows a system of an example embodiment.
Figure 6 schematically shows a system of an example embodiment.
Figure 7 schematically shows a system of an example embodiment.
Figure 8 schematically shows a system of an example embodiment.
Figure 9 schematically shows a system of an example embodiment.
Figure 10 schematically shows a system of an example embodiment.
Figure 11 schematically shows a system of an example embodiment.
Figure 12 schematically shows a system of an example embodiment.
Figure 13 schematically shows a system of an example embodiment.
Figure 14 schematically shows a system of an example embodiment.
Figure 15 schematically shows a system of an example embodiment.
Figure 16 schematically shows a system of an example embodiment.
Figure 17 schematically shows a system of an example embodiment.

### DETAILED DESCRIPTION

As a first aspect of the present disclosure, there is provided a system comprising:
- a plasma reactor having an inlet and an outlet and a quenching arrangement configured to quench NOx, the plasma reactor being configured to conduct nitrogen oxide, NOx, formation;
- a conversion arrangement being configured to convert the NOₓ to nitric acid, HNO₃, the conversion arrangement is having an inlet, a first outlet configured to remove HNO₃ and a second outlet configured to remove residual gas, the inlet of the conversion arrangement being configured to receive the formed NOx from the plasma reactor;
- a compressor having an inlet and an outlet, the compressor being configured to increase pressure of gas to a pressure of ≥ 1.1 bar, the inlet of the compressor configured to receive residual gas from the second outlet of the conversion arrangement; and the outlet of the compressor is arranged upstream of the inlet of the plasma reactor; and
- an arrangement configured to supply quenching medium to the outlet and/or to the quenching arrangement of the plasma reactor, the quenching arrangement being configured to supply the quenching medium from the outlet of the compressor and/or from the second outlet of the conversion arrangement.

The plasma reactor is not limited to a certain design or type of reactor. The reactor typically comprises plasma generating means, such as electrodes or antennas, to provide a plasma inside a plasma zone in the reactor. The reactor can contain one compartment where the plasma is created and quenched. Alternatively, the plasma generation is separate of the quenching. In such case, the quenching arrangement is arranged in a separate section of the plasma reactor than the plasma zone. Likewise, the quenching arrangement is not limited to a certain type of quenching arrangement or position. The plasma reactor involves all parts where plasma is generated and quenched.

As understood by the skilled person, the inlet of the plasma reactor is configured to receive gas to be reacted in a plasma zone of the plasma reactor and the outlet of the plasma reactor is configured to exhaust gas and products leaving the reactor. By plasma reactor is meant a reactor where the temperature applied in the reactor contributes to reaching conditions where the gas can be ionized and, at least partially, form a plasma.

The plasma reactor is typically constructed in a material that is both temperature resistant and mechanically resistant, capable of withstanding both the load from the pressure difference and the temperature. Examples of such material include MgO or the composite HfB2/20% SiC that has a high oxidation resistance and can resist temperatures above 2100 K. Alternatively, the reactor wall can be cooled to a temperature where it has enough strength to carry the pressure difference. Examples of reactor set-ups that can be used include the setup described by Hans-Peter Schmidt and Günter Speckhofer (Schmidt, H-P., and G. Speckhofer. "Experimental and theoretical investigation of high-pressure arcs. I. The cylindrical arc column (two-dimensional modeling)." IEEE Transactions on plasma science 24.4

(1996): 1229-1238.), where a gas plasma reactor reaching argon temperatures above 20 000 K at a pressure of 100 bar was created in a bell-shaped Pyrex^{®} glass. Another example of a reactor is available from HiiROC Ltd, UK, capable of producing a plasma at a pressure of 50 bar.

In the gas mixture comprising oxygen and nitrogen, the oxygen is preferably oxygen gas (O₂) and the nitrogen is preferably nitrogen gas (N₂). The gas mixture comprising oxygen and nitrogen may be air.

By nitrogen oxides (NOₓ) is meant compounds produced by reacting nitrogen and oxygen. Preferably, the nitrogen oxides are nitric oxide (NO) and/or nitrogen dioxide (NO₂). NOx formation, i.e. NOx synthesis, is conducted in the plasma reactor by reacting oxygen and nitrogen.

The thermodynamic balance in formation of NO₂ from N₂ and O₂ is:

(i) N₂ + O₂ ⇄ 2NO

(2) 2NO + O₂ ⇄ NO₂

Gas turns into plasma when sufficient amounts of heat and/or energy is added to it to excite the molecules and atoms to the right level, by temperature or by electromagnetic waves exciting electrons or provoking collisions. As a first step, molecules dissociate which forms free radicals, as a second step, atoms that make up the gas start to lose their electrons and become positively charged ions. The lost electrons are then able to float freely, i.e. they are ionized. Plasma is one of the four common states of matter: solid, liquid, gas, and plasma. Plasma is an electrically charged gas. Because plasma particles have an electrical charge, they are affected by electrical and magnetic fields. The gas mixture is converted into a plasma when sufficiently excited.

The plasma in the plasma reactor is produced from the excitation of the gas mixture comprising oxygen and nitrogen.

The quenching arrangement is an arrangement for provision of quenching media to the plasma and/or formed products to quench said plasma and/or formed products.

The conversion arrangement configured to convert the NOₓ to nitric acid, HNO₃, has an inlet, a first outlet configured to remove HNO₃ and a second outlet configured to remove residual gas, the inlet of the conversion arrangement being configured to receive the formed NOx from the plasma reactor. The first outlet is typically arranged at a lower region, such as at the bottom, of the conversion arrangement as such position facilitates removal of HNO₃ typically being a in liquid form. The second outlet is typically arranged at an upper region, such as at the top, of the conversion arrangement as such position facilitates removal of residual gas. Typically, the conversion arrangement is typically an absorption column. An absorption column converts the NOx to the HNO₃ by passing NOx-gases through a packed bed of catalytic material, typically supported by water or an aqueous solution.

The compressor is not limited to a certain type of compressor. It is well-known to the skilled person several types of compressors capable of increasing pressure of gas to a pressure of ≥ 1.1 bar. The inlet of the compressor is configured to receive residual gas from the second outlet of the conversion arrangement; and the outlet of the compressor is arranged upstream of the inlet of the plasma reactor. Thereby, the inlet of the plasma reactor is configured for receiving pressurised gas having a pressure of ≥ 1.1 bar form the compressor. By recirculating unreacted gas from the conversion arrangement via the compressor to the inlet of the plasma reactor, the yield of the system in terms of gas mixture fed to the system and nitric acid extracted from the system is beneficially improved.

As understood by the skilled person, a component of the system being configured to receive gas and/or NOx from another component is not limited to directly receive the gas and/or NOx. There may be further components arranged in between that the gas and/or NOx are configured to pass as long as the gas and/or NOx eventually can be provided to the specified component via a conduit, a tube, pipe or other component. Accordingly, there may be further components of the system arranged between the plasma reactor and the conversion arrangement. Likewise, there may be further components arranged between the conversion arrangement and the compressor and there may be further components arranged between the compressor and the plasma reactor. Non-limiting examples of components are devices for regulating temperature, such as heat exchangers or coolers, pumps, valves, turbines, purging arrangement to remove gas, e.g. Ar and CO2, accumulator, pressure and flow controlling arrangements.

The system comprises an arrangement configured to supply quenching medium to the outlet of the plasma reactor and/or to the quenching arrangement, the quenching arrangement being configured to supply the quenching medium from the outlet of the compressor and/or from the second outlet of the conversion arrangement.

The quenching medium typically is typically a gas mixture comprising oxygen and nitrogen, such as air, water, oxygen gas, nitrogen gas or mixtures thereof, or the quenching medium is a liquid comprising water nitrogen, oxygen, air or mixtures thereof.

It is particularly beneficial that the quenching medium is recirculated gas from the compressor and/or recirculated residual gas from the conversion arrangement. Such arrangement is beneficial in terms of overall energy efficiency of the system as quenching medium with a beneficial temperature for quenching can be supplied. Moreover, as the supplied gas is from the second outlet of the conversion arrangement or from the compressor, the gas for quenching can be recirculated gas. In particular residual gas from the conversion arrangement is advantageously used as quenching medium. The yield of the conversion arrangement is typically not 100% and in such case there will be residual gas exhausted. This gas is well suited to be used in the quenching as it is of a similar composition, or even substantially the same composition, as the gas leaving the plasma reactor through the outlet and can therefore be directly recirculated without any need for purification. In embodiments, there is a cooling device and/or compressor arranged between the second outlet of the conversion arrangement and the quenching arrangement and/or outlet of the plasma reactor, the cooling device and/or compressor configured to cool residual gas and/or increase pressure of the residual gas.

The system typically further comprises:
- a conduit for providing a gas mixture comprising oxygen and nitrogen;
- a gas source arrangement configured to provide the gas mixture to the conduit;

the conduit being configured to direct the gas mixture comprising oxygen and nitrogen to the quenching arrangement and/or to the outlet of the plasma reactor, or
to the inlet of the plasma reactor.

This conduit provides the feed gas to the system. Hence, the system provides for provision of feed gas to the system in a position in the vicinity of the outlet of the plasma reactor and/or to the quenching, or to the inlet of the plasma reactor or to the inlet of the conversion arrangement. As understood by the skilled person, feed gas to the system is the gas provided not being recycled or recirculated gas. The feed gas is provided from a gas source arrangement.

The conduit provides the gas mixture comprising oxygen and nitrogen downstream of the outlet of the plasma reactor, the conduit is configured to direct the gas mixture to the quenching arrangement and/or to the outlet of the plasma reactor. The gas can be provided to the quenching arrangement by for example by the use of a valve, an injector or a nozzle that directs the gas mixture to the quenching arrangement. Yet another option is to provide the gas mixture from the conduit via a separate pipe or tube on or in the reactor wall to the quenching arrangement. Yet another option is to inject the gas mixture in a way so that it moves along the inner walls of the reactor until reaching the quenching arrangement so that the gas mixture is substantially not mixed with the plasma for example by means flow schemes provided by nozzle(s). Likewise, the gas can be provided to the outlet or inlet by for example by the use of a valve, an injector or a nozzle that directs the gas mixture to the quenching arrangement. Yet another option is to provide the gas mixture from the conduit via a separate pipe or tube on or in the reactor wall to the outlet or inlet. There is no limitation in how the gas mixture is directed by the conduit to the quenching arrangement and/or to the outlet or inlet of the plasma reactor and the skilled person is aware of other techniques in addition to the ones described herein to provide a gas flow to a certain component in a system.

The gas source arrangement may comprise an oxygen concentration arrangement, such as an oxygen sieve or a membrane separation or a cryogenic gas separation. The gas source arrangement may comprise a device configured to supply air. The gas source arrangement may comprise a device configured to supply nitrogen gas, a device configured to supply oxygen gas and a valve configured to distribute gas being configured to supply nitrogen gas from the device and oxygen gas from the device to the conduit with feed gas.

The system typically further comprises:
- a first heat exchanger comprising a first conduit configured to cool a gas mixture comprising oxygen and nitrogen downstream of the plasma reactor, as well as a second conduit configured to heat a gas mixture comprising oxygen and nitrogen upstream of the plasma reactor, the first heat exchanger is configured to direct the gas mixture discharged from the second conduit of the first heat exchanger to the inlet of the plasma reactor, and the second conduit of the first heat exchanger is configured to receive the formed NOx from the plasma reactor and to direct the NOx to the inlet of the conversion arrangement.

The first heat exchanger is beneficial as the formed NOx from the plasma reactor is typically of a high temperature even in case mixed with feed gas from the conduit. It is beneficial to cool off this gas prior to providing it to the conversion arrangement. Likewise, it is beneficial to heat the gas mixture provided from the compressor on the way into the plasma reactor. Accordingly, by the first heat exchanger, the residual heat from gas leaving the plasma reactor can be used to heat gas entering the plasma reactor so that the energy efficiency of the plasma reactor is improved. The amount of feed gas can beneficially be balanced by a gas source arrangement so that there is enough gas to provide to the plasma reactor to form a satisfactory amount of NOx and HNO₃ while reducing backwards reactions and have the gas hot enough entering the first conduit of the first heat exchanger so that if efficiently heats the gas passing through the second conduit of the first heat exchanger. The second conduit of the first heat exchanger is typically configured to receive the formed NOx from the plasma reactor and to direct the gas mixture and NOx to the inlet of the conversion arrangement. Hence, also amount of N and O in the feed gas is typically balanced based on the formation of satisfactory amount of HNO3.

The system typically further comprises:
- a first valve configured to distribute gas being configured to direct the gas mixture discharged from the outlet of the compressor to the second conduit of the first heat exchanger and/or to the conduit for providing the gas mixture and/or to a conduit for providing the gas mixture downstream of the outlet of the plasma reactor or to the plasma reactor and configured to direct the gas mixture to the quenching arrangement.

It may be advantageous to direct at least some of the gas leaving the compressor to the outlet and/or quenching arrangement as this gas is not yet heated and can balance the gas flow of gas entering with the feed gas to the system reducing the need for excess feed gas as well as making it possible to quench to the desired temperature in case the temperature of the feed gas will not be sufficient for that purpose. In case feed gas is provided to the outlet and/or quenching arrangement, this gas can either be mixed with the feed gas before being provided to the outlet and/or quenching arrangement or allowed to enter separately from the feed gas at the outlet and/or quenching arrangement and mixed therein with both feed gas and gas leaving the plasma reactor. In case the feed gas is provided to the plasma reactor or to the inlet of the conversion arrangement the at least some of the gas leaving the compressor being directed to the outlet and/or quenching arrangement is not mixed with feed gas. The first valve is arranged to distribute the different gas flows. The feed gas can be supplied as mixture of oxygen and nitrogen gas. Alternatively, there are separate inlets for the oxygen gas and nitrogen gas to enter at the inlet of the plasma reactor, or at the inlet of the conversion arrangement or at the outlet and/or quenching arrangement of the plasma reactor.

The system may further comprise a second valve configured to distribute gas being configured to direct the gas mixture from the gas source arrangement and/or the gas discharged from the first valve to the conduit. Such second valve is advantageous as the gas flow between gas provided from the first valve can be further balanced with feed gas provided from the gas source arrangement. In case of a second valve, the gas source arrangement may further comprise a device configured to supply nitrogen gas, a device configured to supply oxygen gas and a third valve configured to distribute gas being configured to supply nitrogen gas from the device and oxygen gas from the device to the second valve.

The system may further comprise an arrangement configured to recover energy being configured to receive the gas mixture from the first conduit of the first heat exchanger and supply the gas mixture to the inlet of the conversion arrangement, and receive the residual gas from the second outlet of the conversion arrangement and supply the residual gas to the inlet of the compressor. Gas passing through the first conduit of the first heat exchanger will cool off in the first heat exchanger, but the gas will still be of a temperature being sufficiently high for conducting further extraction of heat being beneficial in terms of energy balance of the system. The arrangement for recovering energy provides the benefits of further cooling down the gas prior to entering the conversion arrangement as well as cooling residual gas from the conversion arrangement being supplied to the compressor and thereafter to the plasma reactor. It is beneficial for the efficiency of the compressor providing gas mixture to the inlet of the plasma reactor that the recirulated gas entering the compressor has been cooled.

The arrangement configured to recover energy typically comprises a second heat exchanger, optionally a third heat exchanger, and an arrangement configured to produce electricity, the second heat exchanger comprises a first conduit configured to cool and/or heat a gas mixture comprising oxygen and nitrogen, to receive the gas mixture from the first conduit of the first heat exchanger and to supply the gas mixture to the inlet or the conversion arrangement, a second conduit configured to receive a medium for energy recovery from either the optional third heat exchanger or from the arrangement, to cool and/or heat the gas mixture and to provide the medium to the arrangement, the optional third heat exchanger, if included, comprises a first conduit being configured to receive the residual gas from the second outlet of the conversion arrangement and supply the residual gas to the inlet of the compressor, a second conduit configured to cool and/or heat the medium and to receive the medium from the arrangement as well as provide the medium to the second conduit of the second heat exchanger. In one embodiment only the second heat exchanger is included in the arrangement configured to recover energy. In such case, gas received from the first heat exchanger is cooled before being provided to the conversion arrangement and residual gas from the conversion arrangement is supplied to the first compressor. Alternatively, the third heat exchanger is included, and in such case the residual gas from the conversion arrangement is supplied to the third heat exchanger where it is cooled before being supplied to the first compressor. The arrangement for energy recovery may be a closed loop system where the medium is circulating or an open system where medium is supplied to the arrangement.

Such arrangement is beneficial in terms of overall energy efficiency of the system. The for energy recovery medium in such case is typically a gas mixture comprising oxygen and nitrogen, such as air, water, oxygen gas, nitrogen gas or mixtures thereof, or the medium is a liquid comprising water, supercritical CO2 or mixtures thereof. The medium for energy recovery may also be a medium suitable for organic rankine cycles, such as hydrocarbons, refrigerants, siloxanes, alcohols, aromatic compounds, or binary and zeotropic mixtures.

The arrangement configured to produce electricity typically comprises a second compressor configured to pressurise the medium for energy recovery and provide the pressurized medium to the second conduit of the third heat exchanger, and a turbine configured to receive the medium from the second conduit of the second heat exchanger, the turbine being axially connected to the second compressor, and the turbine being connected to a second arrangement for energy recovery. Such arrangement is beneficial in terms of overall energy efficiency of the system. The medium in such case is typically a gas mixture comprising oxygen and nitrogen, such as air, water, oxygen gas, nitrogen gas or mixtures thereof, or the medium is a liquid comprising water, supercritical CO2 or mixtures thereof. The medium for energy recovery may also be a medium suitable for organic rankine cycles, such as hydrocarbons, refrigerants, siloxanes, alcohols, aromatic compounds, or binary and zeotropic mixtures.

The second arrangement for energy recovery may comprise a fourth heat exchanger, a fifth heat exchanger, a sixth heat exchanger, and a second turbine, the fourth heat exchanger comprises a first conduit being configured to cool and/or heat a medium for energy recovery downstream of the turbine, as well as a second conduit configured to cool and/or heat a medium downstream of the fifth heat exchanger and upstream of the second turbine, the fourth heat exchanger is configured to direct the medium discharged from the first conduit to the fifth heat exchanger, the fifth heat exchanger comprises a first conduit being configured to cool and/or heat a medium downstream of the fourth heat exchanger, and a second conduit configured to cool and/or heat a medium upstream of the sixth heat exchanger, the sixth heat exchanger comprises a first conduit configured to cool and/or heat a medium downstream of the second turbine and upstream of the fifth heat exchanger. Typically, the arrangement for energy recovery further comprises a compressor or a pump to pressurize the medium. Such compressor or pump may be arranged so that medium supplied from the first conduit of the sixth heat exchanger is supplied to the compressor or pump which in turn supplies the medium to the second conduit of the sixth heat exchanger. Such arrangement is beneficial in terms of overall energy efficiency of the system. The medium for energy recovery in such case is typically a gas mixture comprising oxygen and nitrogen, such as air, water, oxygen gas, nitrogen gas or mixtures thereof, or the quenching medium is a liquid comprising water, supercritical CO2 or mixtures thereof. The medium for energy recovery may also be a medium suitable for organic rankine cycles, such as hydrocarbons, refrigerants, siloxanes, alcohols, aromatic compounds, or binary and zeotropic mixtures. The medium for energy recovery is typically the same in all arrangements where a medium for energy recovery is used in the system.

The system may further comprise a seventh heat exchanger or a cooler/condenser arrangement being configured to cool and/or heat a gas mixture comprising oxygen and nitrogen downstream of the first conduit of the first heat exchanger and to supply the gas mixture to the inlet of the conversion arrangement. Such arrangement is beneficial in terms of overall energy efficiency of the system as cooling of gas entering the conversion arrangement can be used to heat gas being provided to the compressor. Advantageously, the seventh heat exchanger or a cooler/condenser arrangement is combined with the arrangement configured to recover energy being configured to receive the gas mixture from the first conduit of the first heat exchanger, and supply the gas mixture to the inlet of the conversion arrangement. The cooler/condenser arrangement is further beneficial allowing cooling of gas supplied to the conversion arrangement to be further cooled, such as cooled at least to a dew point of the conversion arrangement. Such dew point is typically about 30 °C. Hence the cooler/condenser arrangement is suitable for cooling to a temperature of 30 °C or below.

For the avoidance of doubt, the quenching medium and the medium for energy recovery are two distinct mediums.

As a second aspect of the present disclosure, there is provided a method for conducting nitrogen oxide formation in a plasma reactor having an inlet and an outlet and a quenching arrangement configured to quench NOx, wherein the method comprises the steps:
- providing a gas mixture comprising oxygen and nitrogen;
- compress the gas mixture to a pressure of ≥ 1.1 bar in a first compressor;
- supply the compressed gas having a pressure of ≥ 1.1 bar to the inlet of the plasma reactor and conduct NOx formation in a plasma;
- quench the NOx formed in the plasma reactor by bringing the NOx in contact with a quenching medium, the quenching medium is at least partly provided from an outlet of a compressor, and/or
   from the second outlet of the conversion arrangement,
- supply the NOx to an inlet of a conversion arrangement converting the NOₓ to HNO3;
- remove the formed HNO₃ through a first outlet of the conversion arrangement and remove residual gas through a second outlet; and
- supply the residual gas from the second outlet to an inlet of a first compressor

The quenching is typically conducted until obtaining a temperature sufficiently low so that the NOₓ in the cooled gas mixture principally is NO and the NO essentially does not reverse into N₂ and O₂ according to the equilibrium (1). The quenching is typically conducted directly downstream from the plasma reaction in the plasma reactor. Typically, the gas mixture comprising NOₓ is quenched by lowering the temperature below 2200 K, preferably below 2000 K, more preferably below 1900 K, even more preferably below 1700 K.

In one embodiment, the gas mixture is quenched to a temperature below 750 K, preferably to a temperature below 373 K, more preferably to a temperature between 293-363 K, wherein the formation of NO, in accordance with equilibrium (2) is promoted.

The quenching medium is at least partly provided from an outlet of a compressor, such as the outlet of the first compressor, or the quenching medium is at least partly provided from the second outlet of the conversion arrangement.

The gas mixture and NOx exiting the plasma reactor are typically cooled before being supplied to the inlet of the conversion arrangement. Typically, the cooling is conducted in a device for heat recovery, such as a first heat exchanger.

Part of the compressed gas supplied from the first compressor may be to the device for heat recovery and/or part of the gas may be supplied downstream of the outlet of the plasma reactor.

The gas mixture comprising oxygen and nitrogen may be a mixture comprising gas supplied from a gas source arrangement configured to provide a gas mixture of oxygen and nitrogen and compressed gas supplied from the first compressor.

The NOx exiting the plasma reactor is typically after being cooled supplied to an arrangement configured to recover energy prior to being supplied to the inlet of the conversion arrangement, and wherein the residual gas supplied from the second outlet of the conversion arrangement is supplied to the arrangement for energy recovery prior to the inlet of the first compressor.

The arrangement for energy recovery typically comprises a second heat exchanger, optionally a third heat exchanger and an arrangement configured to produce electricity, wherein the NOx exiting the plasma reactor is after being cooled supplied to the second heat exchanger prior to the inlet of the conversion arrangement, and the residual gas supplied from the second outlet of the conversion arrangement is supplied to the optional third heat exchanger, the gas passing the second heat exchanger is cooled, if included, the gas passing the third heat exchanger is cooled and heat extracted from the second and optional third heat exchangers is turned into electricity in the arrangement configured to produce electricity.

The cooled NOx supplied from the outlet of the plasma reactor is typically further cooled in a seventh heat exchanger or a cooler/condenser arrangement prior to being supplied to the inlet of the conversion arrangement.

The gas is typically compressed to a pressure of ≥ 1.2 bar, such as ≥ 1.3 bar, such as ≥ 1.5 bar, such as ≥ 5 bar such as ≥ 10 bar, such as 1.2-100 bar, such as 5-100 bar, such as 10-100 bar in the first compressor.

The gas is typically compressed to a pressure of ≥ 1.2 bar, such as ≥ 1.3 bar, such as ≥ 1.5 bar, such as ≥ 5 bar such as ≥ 10 bar, such as 1.2-100 bar, such as 5-100 bar, such as 10-100 bar in the first compressor.

The quenching medium is typically a gas mixture comprising oxygen and nitrogen, such as air, water, oxygen gas, nitrogen gas or mixtures thereof, or the quenching medium is a liquid comprising water, supercritical CO2 or mixtures thereof.

The gas mixture comprising oxygen and nitrogen is provided to the quenching arrangement and/or to the outlet of the plasma reactor, or to the inlet of the plasma reactor.

The examples and embodiments discussed above in connection to the first aspect apply to the second aspect *mutatis mutandis.*

The aspects of the present disclosure will now be described more fully hereinafter with reference to the accompanying drawings, in which certain embodiments of the invention are shown.

These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

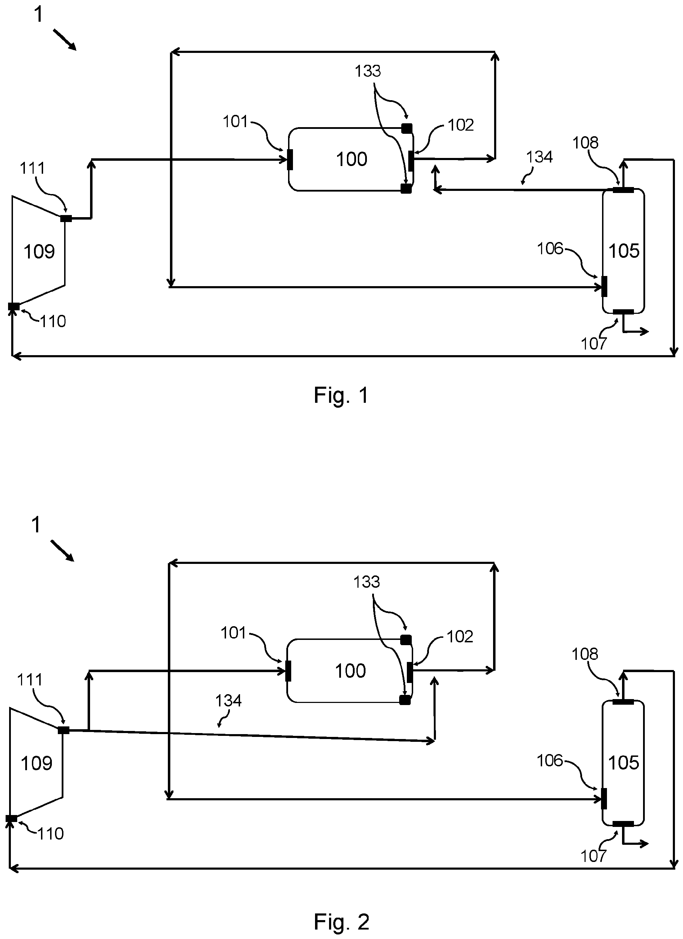

Fig. 1 show an example of a system 1 comprising:
- a plasma reactor 100 having an inlet 101 and an outlet 102 and a quenching arrangement 133 configured to quench NOx, the plasma reactor 100 being configured to conduct nitrogen oxide, NOx, formation;
- a conversion arrangement 105 being configured to convert the NOₓ to nitric acid, HNO₃, the conversion arrangement 105 is having an inlet 106, a first outlet configured to remove HNO₃ 107 and a second outlet configured to remove residual gas 108, the inlet 106 of the conversion arrangement being configured to receive the formed NOx from the plasma reactor 100;

- a compressor 109 having an inlet 110 and an outlet 111, the compressor being configured to increase pressure of gas to a pressure of ≥ 1.1 bar, the inlet 110 of the compressor 109 configured to receive residual gas from the second outlet 108 of the conversion arrangement 105; and the outlet of the compressor 111 is arranged upstream of the inlet 101 of the plasma reactor 100; and
- an arrangement 134 configured to supply quenching medium to the outlet 102 and/or to the quenching arrangement 133 of the plasma reactor 100, the quenching arrangement 134 being configured to supply the quenching medium from the second outlet 108 of the conversion arrangement 105.

Fig. 2 show an example of a system 1 comprising:
- a plasma reactor 100 having an inlet 101 and an outlet 102 and a quenching arrangement 133 configured to quench NOx, the plasma reactor 100 being configured to conduct nitrogen oxide, NOx, formation;
- a conversion arrangement 105 being configured to convert the NOₓ to nitric acid, HNO₃, the conversion arrangement 105 is having an inlet 106, a first outlet configured to remove HNO₃ 107 and a second outlet configured to remove residual gas 108, the inlet 106 of the conversion arrangement being configured to receive the formed NOx from the plasma reactor 100;
- a compressor 109 having an inlet 110 and an outlet 111, the compressor being configured to increase pressure of gas to a pressure of ≥ 1.1 bar, the inlet 110 of the compressor 109 configured to receive residual gas from the second outlet 108 of the conversion arrangement 105; and the outlet of the compressor 111 is arranged upstream of the inlet 101 of the plasma reactor 100; and
- an arrangement 134 configured to supply quenching medium to the outlet 102 and/or to the quenching arrangement 133 of the plasma reactor 100, the quenching arrangement 134 being configured to supply the quenching medium from the outlet 111 of the compressor 109.

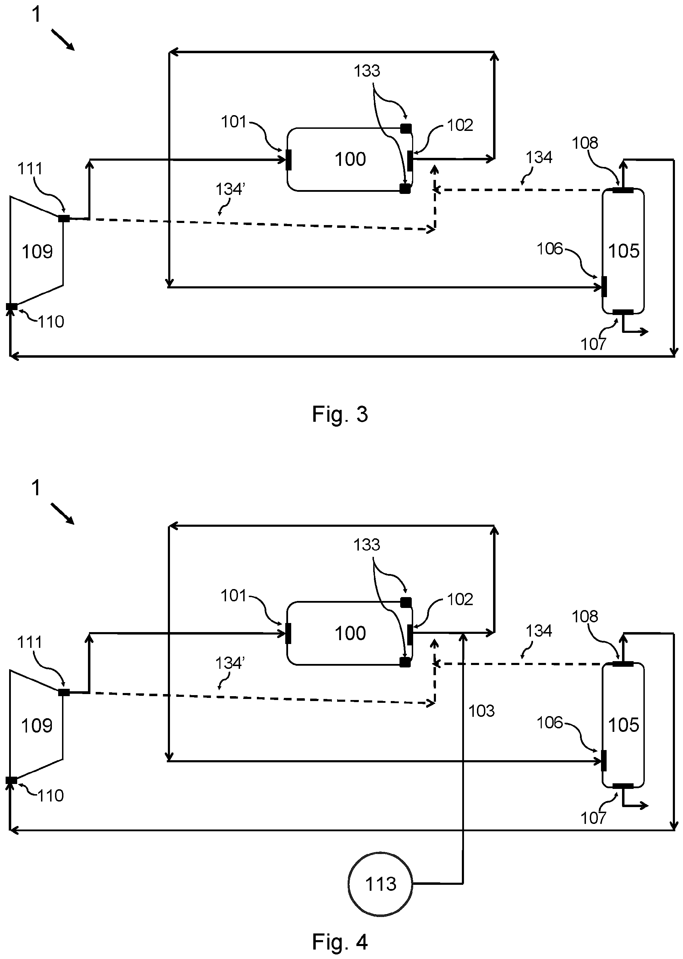

Fig. 3 show an example of a system 1 comprising:
- a plasma reactor 100 having an inlet 101 and an outlet 102 and a quenching arrangement 133 configured to quench NOx, the plasma reactor 100 being configured to conduct nitrogen oxide, NOx, formation;
- a conversion arrangement 105 being configured to convert the NOₓ to nitric acid, HNO₃, the conversion arrangement 105 is having an inlet 106, a first outlet configured to remove HNO₃ 107 and a second outlet configured to remove residual gas 108, the inlet 106 of the conversion arrangement being configured to receive the formed NOx from the plasma reactor 100;
- a compressor 109 having an inlet 110 and an outlet 111, the compressor being configured to increase pressure of gas to a pressure of ≥ 1.1 bar, the inlet 110 of the compressor 109 configured to receive residual gas from the second outlet 108 of the conversion arrangement 105; and the outlet of the compressor 111 is arranged upstream of the inlet 101 of the plasma reactor 100; and
- an arrangement 134, 134' configured to supply quenching medium to the outlet 102 and/or to the quenching arrangement 133 of the plasma reactor 100, the quenching arrangement 134' being configured to supply the quenching medium from the outlet 111 of the compressor 109 and/or the quenching arrangement 134 being configured to supply the quenching medium from the second outlet 108 of the conversion arrangement 105.

In case of both arrangement 134, 134' are provided, the quenching medium can be provided separately to the plasma reactor or alternatively pre-mixed before providing the quenching medium to the plasma reactor.

Fig. 4 show an example of system 1 which in comparison with Fig. 3 further comprises:
- a conduit 103 for providing a gas mixture comprising oxygen and nitrogen;
- a gas source arrangement 113 configured to provide the gas mixture to the conduit 103;
the conduit 103 is configured to direct the gas mixture comprising oxygen and nitrogen to the quenching arrangement 133 and/or to the outlet of the plasma reactor 102.

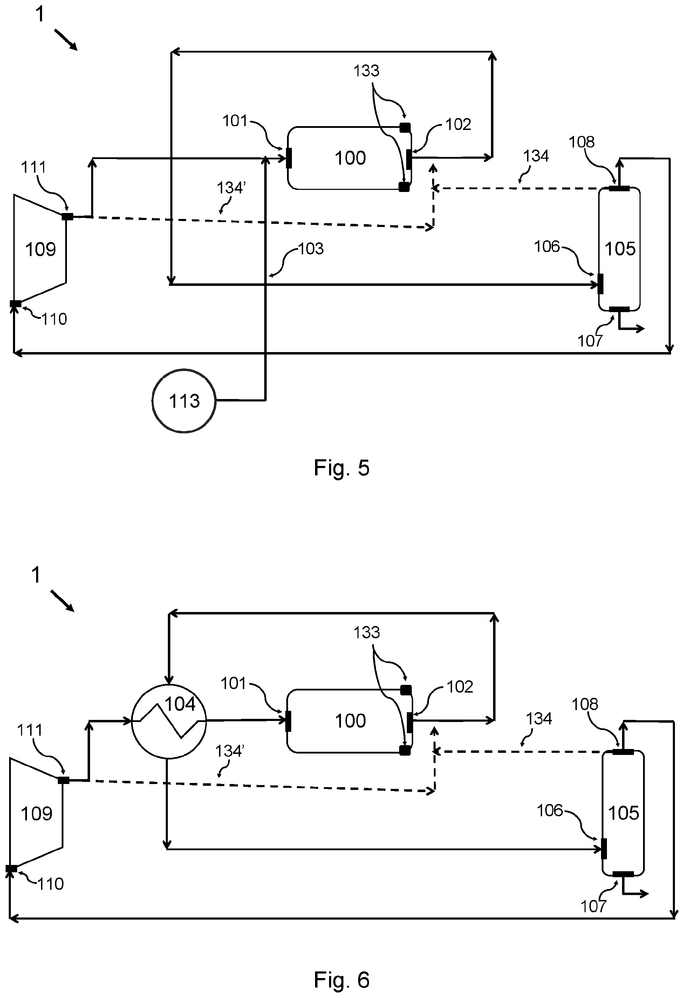

Fig. 5 show an example of system 1 which in comparison with Fig. 3 further comprises:
- a conduit 103 for providing a gas mixture comprising oxygen and nitrogen;
- a gas source arrangement 113 configured to provide the gas mixture to the conduit 103;
the conduit 103 is configured to direct the gas mixture comprising oxygen and nitrogen to the inlet 101 of the plasma reactor.

Fig. 6 show an example of the system 1 which in comparison with Fig. 3 further comprises a first heat exchanger 104 comprising a first conduit (not shown) configured to cool a gas mixture comprising oxygen and nitrogen downstream of the plasma reactor 100, as well as a second conduit (not shown) configured to heat a gas mixture comprising oxygen and nitrogen upstream of the plasma reactor 100, the first heat exchanger 104 is configured to direct the gas mixture discharged from the second conduit of the first heat exchanger 104 to the inlet 101 of the plasma reactor, and the second conduit of the first heat exchanger 104 is configured to receive the gas the formed NOx from the plasma reactor 100 and to direct the NOx to the inlet 106 of the conversion arrangement 105.

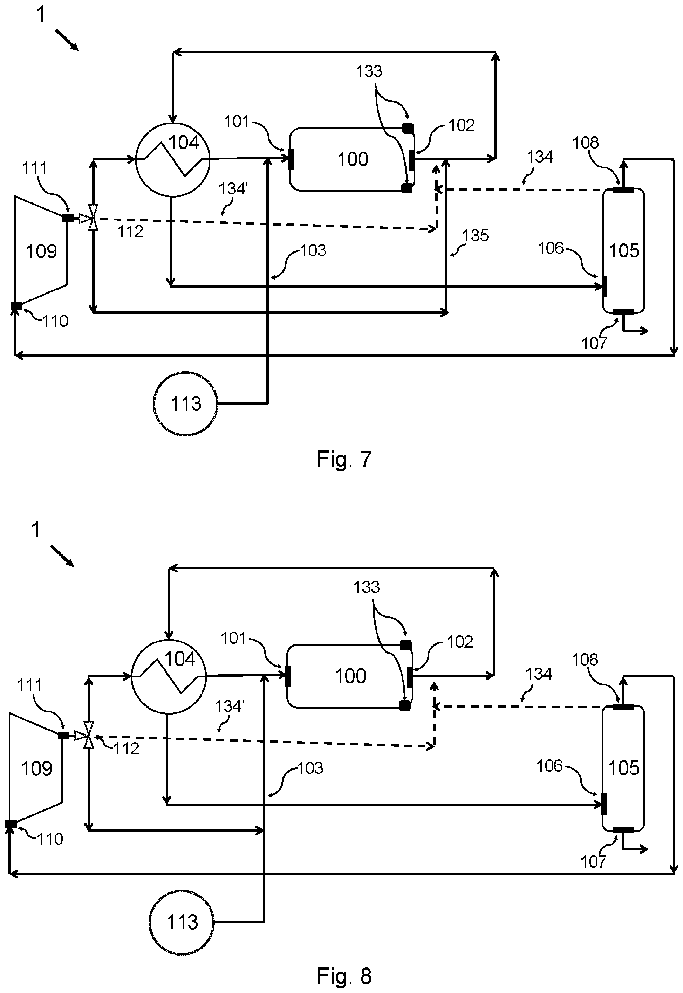

Fig. 7 show an example of the system 1 which in comparison with Fig. 7 further comprises:
- a conduit 103 for providing a gas mixture comprising oxygen and nitrogen;
- a gas source arrangement 113 configured to provide the gas mixture to the conduit 103;
   the conduit 103 being configured to direct the gas mixture comprising oxygen and nitrogen to the inlet 101 of the plasma reactor; and
- a first valve configured to distribute gas 112 being configured to direct the gas mixture discharged from the outlet of the compressor 111 to the second conduit of the first heat exchanger 104 for providing the gas mixture to a conduit 135 for providing the gas mixture downstream of the outlet 102 of the plasma reactor and configured to direct the gas mixture to the quenching arrangement 133.

Fig. 8 show an example of the system 1 which in comparison with Fig. 7 further comprises:
- a conduit 103 for providing a gas mixture comprising oxygen and nitrogen;
- a gas source arrangement 113 configured to provide the gas mixture to the conduit 103;
   the conduit 103 being configured to direct the gas mixture comprising oxygen and nitrogen to the inlet 101 of the plasma reactor; and
- a first valve configured to distribute gas 112 being configured to direct the gas mixture discharged from the outlet of the compressor 111 to the second conduit of the first heat exchanger 104 for providing the gas mixture to the conduit 103 for providing the gas mixture upstream of the inlet 101 of the plasma reactor and configured to direct the gas mixture to the quenching arrangement 133.

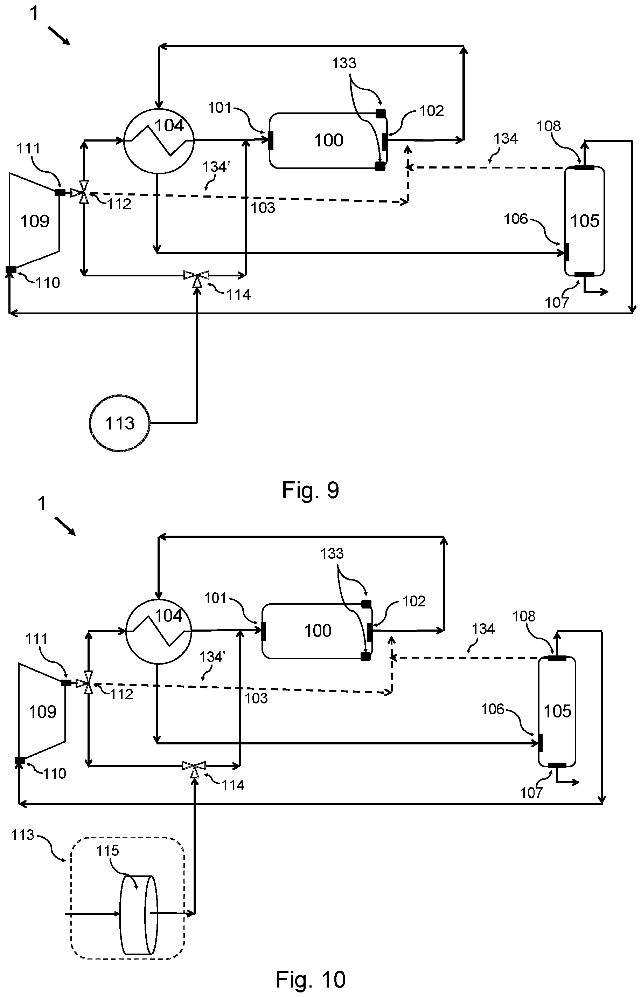

Fig. 9 show an example of the system 1 which in comparison with Fig. 9 further shows a second valve configured to distribute gas 114 being configured to direct the gas mixture from the gas source arrangement 113 and/or the gas discharged from the first valve 112 to the conduit 103.

Fig. 10 show an example of the system 1 which in comparison with Fig. 10 further shows that the gas source arrangement 113 comprises an oxygen concentration arrangement 115.

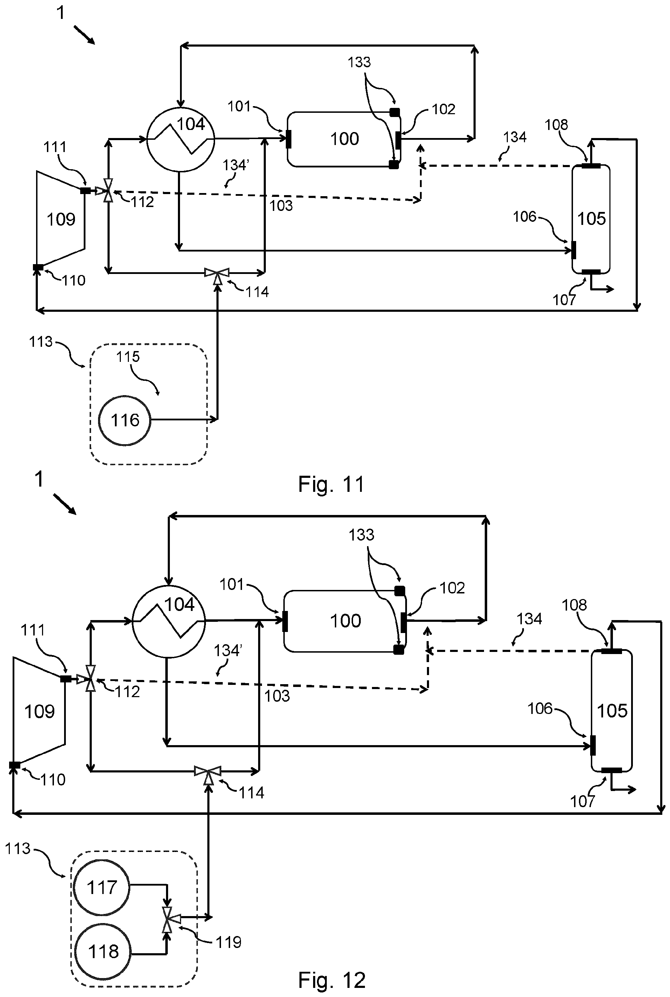

Fig. 11 show an example of the system 1 which in comparison with Fig. 10 further shows that the gas source arrangement 113 comprises a device configured to supply air 116.

Fig. 12 show an example of the system 1 which in comparison with Fig. 10 further shows that the gas source arrangement 113 comprises comprising a device configured to supply nitrogen gas 117, a device configured to supply oxygen gas 118 and a third valve configured to distribute gas 119 being configured to supply nitrogen gas from the device 117 and oxygen gas from the device 118 to the second valve 114.

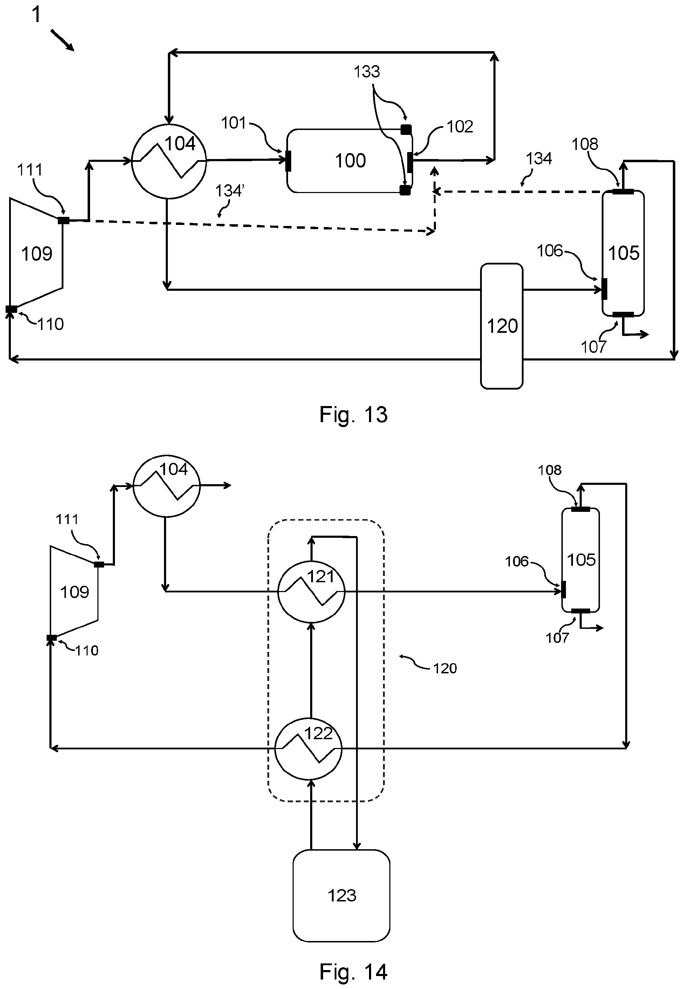

Fig. 13 show an example of the system 1 which in comparison with Fig. 3 further comprises an arrangement configured to recover energy 120 being configured to receive the gas mixture from the first conduit of the first heat exchanger 104, and supply the gas mixture to the inlet 106 of the conversion arrangement 105, and receive the residual gas from the second outlet 108 of the conversion arrangement 105 and supply the residual gas to the inlet 110 of the compressor 109.

Fig. 14 show a zoom-in portion of the system 1 which in comparison with Fig. 3 further shows that the arrangement configured to recover energy 120 comprises a second heat exchanger 121, a third heat exchanger 122 and an arrangement configured to produce electricity 123, the second heat exchanger 121 comprises a first conduit (not shown) configured to cool and/or heat a gas mixture comprising oxygen and nitrogen, to receive the gas mixture from the first conduit of the first heat exchanger 104 and to supply the gas mixture to the inlet 106 or the conversion arrangement 105, a second conduit (not shown) configured receive a medium from the third heat exchanger 122, to cool and/or heat the gas mixture and to provide the medium to the arrangement 123, the third heat exchanger 122 comprises a first conduit (not shown) being configured to receive the residual gas from the second outlet 108 of the conversion arrangement 105 and supply the residual gas to the inlet 110 of the compressor 109, a second conduit (not shown) configured to cool and/or heat the medium and to receive the medium from the arrangement 123 as well as provide the medium to the second conduit of the second heat exchanger 121.

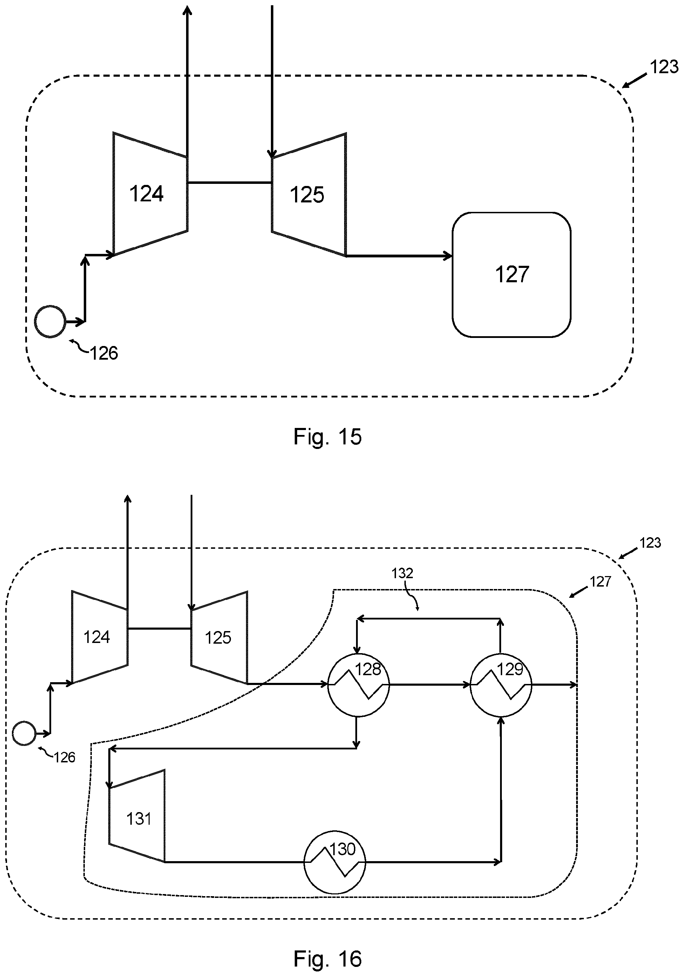

Fig. 15 shows an example of the arrangement configured to produce electricity 123 in which this arrangement comprises a second compressor 124 configured to pressurise the medium and provide the pressurized medium to the second conduit of the third heat exchanger 122, and a turbine 125 configured to receive the medium from the second conduit of the second heat exchanger 121, the turbine 125 being axially connected to the second compressor 124, and the turbine being connected to an arrangement for energy recovery 127. To the compressor 124 there is connected an arrangement for supplying quenching medium 126.

Fig. 16 shows an example of the arrangement configured to produce electricity 123 as well as the arrangement for energy recovery 127. The arrangement configured to produce electricity 123 comprises the same components as in Fig. 14. The arrangement for energy recovery 127 comprises a fourth heat exchanger 128, a fifth heat exchanger 129, a sixth heat exchanger 130, and a second turbine 131, the fourth heat exchanger 128 comprises a first conduit (not shown) being configured to cool and/or heat a medium downstream of the turbine 125, as well as a second conduit (not shown) configured to cool and/or heat a medium downstream of the fifth heat exchanger 129 and upstream of the second turbine 131, the fourth heat exchanger 128 is configured to direct the medium discharged from the first conduit to the fifth heat exchanger 129, the fifth heat exchanger 129 comprises a first conduit (not shown) being configured to cool and/or heat a medium downstream of the fourth heat exchanger 128, and a second conduit (not shown) configured to cool and/or heat a medium upstream of the sixth heat exchanger 130, the sixth heat exchanger comprises a first conduit (not shown) configured to cool and/or heat a medium downstream of the second turbine 131 and upstream of the fifth heat exchanger 129.

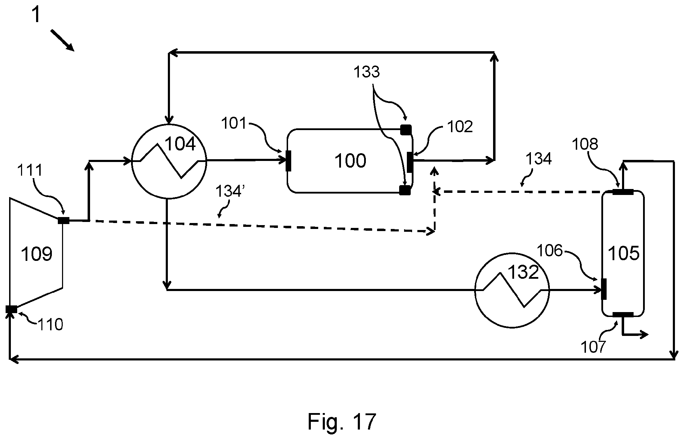

Fig. 17 shows an example of the system 1 which in comparison with Fig. 3 further comprises a seventh heat exchanger or a cooler/condenser arrangement 132 being configured to cool and/or heat a gas mixture comprising oxygen and nitrogen downstream of the first conduit of the first heat exchanger 104 and to supply the gas mixture to the inlet 106 of the conversion arrangement 105.

## Claims

1. A system (1) comprising:
- a plasma reactor (100) having an inlet (101) and an outlet (102) and a quenching arrangement (133) configured to quench NOx, the plasma reactor (100) being configured to conduct nitrogen oxide (NOx) formation;
- a conversion arrangement (105) being configured to convert the NOₓ to nitric acid (HNO₃), the conversion arrangement (105) is having an inlet (106), a first outlet configured to remove HNO₃ (107) and a second outlet configured to remove residual gas (108), the inlet (106) of the conversion arrangement being configured to receive formed NOx from the plasma reactor (100);
- a compressor (109) having an inlet (110) and an outlet (111), the compressor being configured to increase pressure of gas to a pressure of ≥ 1.1 bar, the inlet (110) of the compressor (109) configured to receive residual gas from the second outlet (108) of the conversion arrangement (105); and the outlet of the compressor (111) is arranged upstream of the inlet (101) of the plasma reactor (100); and
- an arrangement (134) configured to supply quenching medium to the outlet (102) and/or to the quenching arrangement (133) of the plasma reactor (100), the quenching arrangement (134) being configured to supply the quenching medium from the outlet (111) of the compressor (109) and/or from the second outlet (108) of the conversion arrangement (105).

2. The system (1) according to claim 1 further comprising:
- a conduit (103) for providing a gas mixture comprising oxygen and nitrogen;
- a gas source arrangement (113) configured to provide the gas mixture to the conduit (103);
the conduit (103) being configured to direct the gas mixture comprising oxygen and nitrogen to the quenching arrangement (133) and/or to the outlet of the plasma reactor (102), or
to the inlet (101) of the plasma reactor.

3. The system (1) of claim 1 or 2 further comprising:
- a first heat exchanger (104) comprising a first conduit configured to cool a gas mixture comprising oxygen and nitrogen downstream of the plasma reactor (100), as well as a second conduit configured to heat a gas mixture comprising oxygen and nitrogen upstream of the plasma reactor (100), the first heat exchanger (104) is configured to direct the gas mixture discharged from the second conduit of the first heat exchanger (104) to the inlet (101) of the plasma reactor, and the first conduit of the first heat exchanger (104) is configured to receive the formed NOx from the plasma reactor (100) and to direct NOx to the inlet (106) of the conversion arrangement (105).

4. The system of claim 2 or 3, wherein the first conduit of the first heat exchanger (104) is configured to receive the gas mixture provided by the conduit (103) and the formed NOx from the plasma reactor (100) and to direct the gas mixture and NOx to the inlet (106) of the conversion arrangement (105).

5. The system (1) of claim 3 or 4, further comprising:
- a first valve configured to distribute gas (112) being configured to direct the gas mixture discharged from the outlet of the compressor (111) to the second conduit of the first heat exchanger (104) and/or to the conduit (103) for providing the gas mixture and/or to a conduit (135) for providing the gas mixture downstream of the outlet (102) of the plasma reactor or to the plasma reactor (100) and configured to direct the gas mixture to the quenching arrangement (133).

6. The system (1) according to any one of the claims 3-5, the system further comprises an arrangement configured to recover energy (120) being configured to receive the gas mixture from the first conduit of the first heat exchanger (104), and supply the gas mixture to the inlet (106) of the conversion arrangement (105), and receive the residual gas from the second outlet (108) of the conversion arrangement (105) and supply the residual gas to the inlet (110) of the compressor (109).

7. The system (1) of claim 6, the arrangement configured to recover energy (120) comprises a second heat exchanger (121), optionally a third heat exchanger (122) and an arrangement configured to produce electricity (123), the second heat exchanger (121) comprises a first conduit configured to cool and/or heat a gas mixture comprising oxygen and nitrogen, to receive the gas mixture from the first conduit of the first heat exchanger (104) and to supply the gas mixture to the inlet (106) or the conversion arrangement (105), a second conduit configured to receive a medium for energy recovery from either the optional third heat exchanger (122) or from the arrangement (123), to cool and/or heat the gas mixture and to provide the medium to the arrangement (123), the optional third heat exchanger (122), if included, comprises a first conduit being configured to receive the residual gas from the second outlet (108) of the conversion arrangement (105) and supply the residual gas to the inlet (110) of the compressor (109), a second conduit configured to cool and/or heat the medium and to receive the medium from the arrangement (123) as well as provide the medium to the second conduit of the second heat exchanger (121).

8. The system (1) of claim 7, the arrangement configured to produce electricity (123) comprises a second compressor (124) configured to pressurise the medium for energy recovery and provide the pressurized medium to the second conduit of the third heat exchanger (122), and a turbine (125) configured to receive the medium from the second conduit of the second heat exchanger (121), the turbine (125) being axially connected to the second compressor (124), and the turbine being connected to a second arrangement for energy recovery (127).

9. The system (1) of claim 8, the arrangement for energy recovery (127) comprises a fourth heat exchanger (128), a fifth heat exchanger (129), a sixth heat exchanger (130), and a second turbine (131), the fourth heat exchanger (128) comprises a first conduit being configured to cool and/or heat a medium downstream of the turbine (125), as well as a second conduit configured to cool and/or heat a medium downstream of the fifth heat exchanger (129) and upstream of the second turbine (131), the fourth heat exchanger (128) is configured to direct the medium discharged from the first conduit to the fifth heat exchanger (129), the fifth heat exchanger (129) comprises a first conduit being configured to cool and/or heat a medium downstream of the fourth heat exchanger (128), and a second conduit configured to cool and/or heat a medium upstream of the sixth heat exchanger (130), the sixth heat exchanger comprises a first conduit configured to cool and/or heat a medium downstream of the second turbine (131) and upstream of the fifth heat exchanger (129).

10. The system (1) according to any one of the claims 3-9, further comprising a seventh heat exchanger or a cooler/condenser arrangement (132) being configured to cool and/or heat a gas mixture comprising oxygen and nitrogen downstream of the first conduit of the first heat exchanger (104) and to supply the gas mixture to the inlet (106) of the conversion arrangement (105).

11. A method for conducting nitrogen oxide (NOx) formation in a plasma reactor (100) having an inlet (101) and an outlet (102) and a quenching arrangement (133) configured to quench NOx, wherein the method comprises the steps:
- providing a gas mixture comprising oxygen and nitrogen;
- compress the gas mixture to a pressure of ≥ 1.1 bar in a first compressor (109);
- supply the compressed gas having a pressure of ≥ 1.1 bar to the inlet (101) of the plasma reactor (100) and conduct NOx formation in a plasma;
- quench the NOx formed in the plasma reactor (100) by bringing the NOx in contact with a quenching medium, the quenching medium is at least partly provided from an outlet of a compressor, and/or
from the second outlet (108) of the conversion arrangement (105),
- supply the NOx to an inlet (106) of a conversion arrangement (105) converting the NOₓ to HNO3;
- remove the formed HNO₃ through a first outlet (107) of the conversion arrangement (105) and remove residual gas through a second outlet (108);
- supply the residual gas from the second outlet (108) to an inlet (110) of a first compressor (109).

12. The method of claim 11, wherein the NOx exiting the plasma reactor (100) is cooled before being supplied to the inlet (106) of the conversion arrangement (105).

13. The method of claim 12, wherein the cooling is conducted in a device for heat recovery, such as a first heat exchanger (104).

14. The method according to any one of the claims 11-13, wherein the gas is compressed to a pressure of ≥ 1.2 bar, such as ≥ 1.3 bar, such as ≥ 1.5 bar, such as ≥ 5 bar such as ≥ 10 bar, such as 1.2-100 bar, such as 5-100 bar, such as 10-100 bar in the first compressor (109).

15. The method according to any one of the claims 11-14, wherein the quenching medium is a gas mixture comprising oxygen and nitrogen, such as air, water, oxygen gas, nitrogen gas or mixtures thereof, or the quenching medium is a liquid comprising water, nitrogen, oxygen, air or mixtures thereof.
